# EUROPEAN PATENT SPECIFICATION

(11) **EP 1 362 739 B1**
(45) Date of publication and mention of the grant of the patent: **13.08.2008**
(21) Application number: 03425270.0
(22) Date of filing: 30.04.2003
(51) Int. Cl.: B60P 1/43

(54) **Ramp for loading and unloading of vans and similar vehicles**
Ladebrücke zum Be- und Entladen von Kleintransportern und ähnlichen Fahrzeugen
Rampe pour charger et décharger une fourgonnette ou véhicules similaires

(30) Priority: 17.05.2002 IT MO20020134
(43) Date of publication of application: 19.11.2003
(73) Proprietor: FAMI S.p.A., 36027 Rosà, VI (IT)
(72) Inventor: Sighinolfi, William, 41018 San Cesario sul Panaro (Modena) (IT)
(74) Representative: Gotra, Stefano

(56) References cited:
- EP-A- 0 504 958
- EP-A- 0 890 474
- GB-A- 2 150 526
- US-A- 4 966 516

## Description

In particular the invention is usefully applied for all vehicles for goods transport which exhibit a sometimes quite highly raised loading plane with respect to the ground, and which therefore require the use of special apparatus for the goods, sometimes heavy and unwieldy, to be comfortably loaded and unloaded.

As is known, one or more ramps are often used to solve the above problem, which dollies, barrows or trucks can be wheeled up and down. In effect with ramps an inclined transitable plane is established between the ground and the loading plane, which is in fact the rear entry (with doors) of the van or other vehicle.

The prior art teaches ramps which are simply made, for example from one or more elongate planks which are rested on the edge of the loading plane and are usually kept in the van itself when not in use.

The prior art has the drawback that the transitable inclined plane formed is unstable, insecure and wobbly.

Further, there is the problem of storing the ramps inside the van.

The prior art also teaches the use of hinged ramps, attached permanently to the side of the loading plane so that they can be rapidly lowered into the inclined position when a goods loading or unloading operation is about to begin. When not in use, the ramps are arranged vertically behind the doors of the back of the van.

The second prior art, though solving the drawbacks of the first prior art, includes some severe limitations.

Firstly, a van with this system has to be bought with the ramps on board, or at most will have to have the ramps fitted, leading to considerable costs and work.

Further, the hinged ramps of the above type, when lowered into the operative position, do not enable a vehicle such as a fork lift truck to be neared right up to the loading plane 13 of the vehicle, as is sometimes necessary when goods are to be directly loaded onto the van.

In other words, in the second prior art, the inclined ramps have to be used for loading and unloading operations, even where they are in fact not needed and indeed obstruct other types of operation.

GB-A-2150526 discloses an apparatus for loading and unloading operations for vans and like vehicles, comprising at least one ramp which can be arranged in an operative inclined position in order to form a transitable plane developing between ground level and an edge of a loading plane of the van; and further comprising a support structure of the ramp which support structure is fixable to the van and enables displacements of the ramp so that the ramp can be selectively arranged in three different configurations, namely the inclined operative position, a first rest position in which the support structure is perpendicular to the load plane and is positioned parallel to the edge, and a second rest position in which the ramp is perpendicular both to the load plane and to the edge and is located externally of the load plane.

In this situation the technical aim set for the invention is to provide an apparatus for loading and unloading operations of a van which obviates the above-cited drawbacks.

An important aim is to provide an apparatus which can be rapidly installed with simple operations which can be carried out by non-specialized personnel, with no special structural modifications of the van; the apparatus can be removed and re-installed as needed on other vehicles too.

A further important aim of the invention is to provide an apparatus which is not only rapid and easy to place in position, forming a stable and safe transitable inclined plane, but which is also equally simple and rapid to disassemble into a special non-use configuration in which it is no longer operative but does not create an obstacle for personnel and/or other vehicles or means for loading and unloading, which can be brought right up to the rear of the van the apparatus is equipped with.

A further aim of the invention is to provide an apparatus which when not in use occupies no internal space in the back of the goods van, but also requires not even partial displacement of the goods contained near the van doors in order to be set up in the operative configuration.

The set technical problem and the specified aims are attained by an apparatus for loading and unloading operations in a van or like vehicle which is characterised in that it comprises one or more of the technical solutions claimed in the appended claims.

A preferred but non-exclusive embodiment of the invention will now be described in a non-limiting description thereof, illustrated in the figures of the drawings, in which:
figure 1 is a lateral view of the apparatus of the invention installed in the back loading chamber of a van and arranged in a first rest position;
figure 2 is a lateral view of the apparatus of figure 1, in which the ramp of the apparatus is shown both in an inclined operative position resting on the ground and in an intermediate position between the inclined operative position and the first rest position;
figure 3 is a front view of the apparatus of figure 1, in the first rest position;
figure 4 is a lateral view of the apparatus of figure 1, in a second rest position with the vehicle stationary;
figure 5 is an enlarged view of the apparatus of figure 1;
figure 6 is an enlarged view of the apparatus of figure 3;
figure 7 is an enlarged schematic view of a section according to line VII-VII of figure 3;
figure 8 is a section made according to line VIII-VIII of figure 4.

With reference to the figures of the drawings, the apparatus according to the invention is denoted in its entirely by number 1.

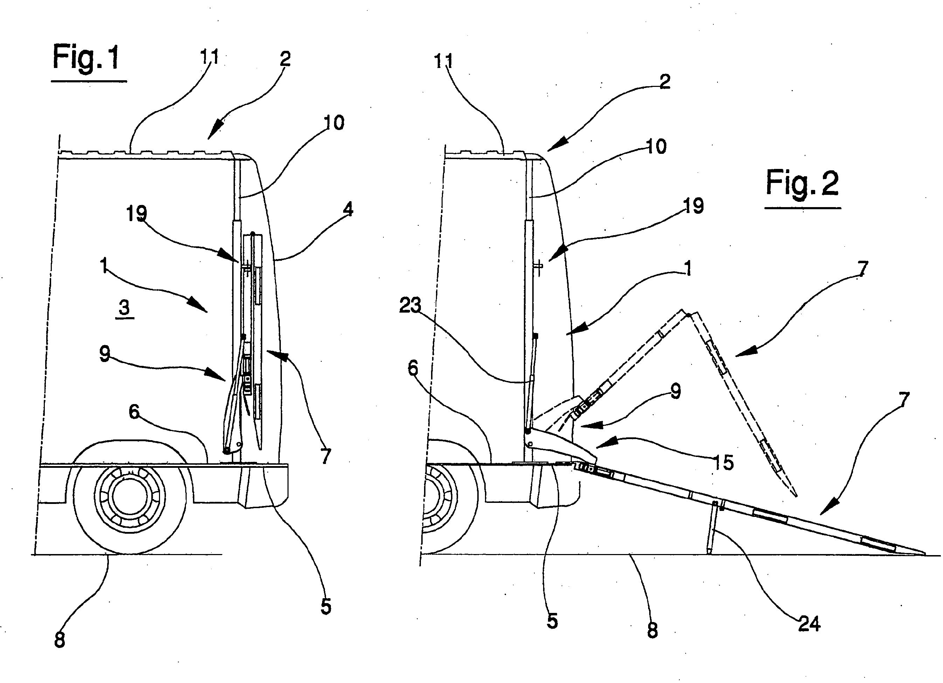

The apparatus 1 is installable on a van 2 inside a loadspace 3 thereof in proximity of one or more rear doors 4, which rear doors 4 delimit an edge 5 of a loading plane 6 comprising a ramp 7 which can be arranged in an inclined operative position (see figure 2) and thus form a transitable plane developing between the ground 8 and the edge 5.

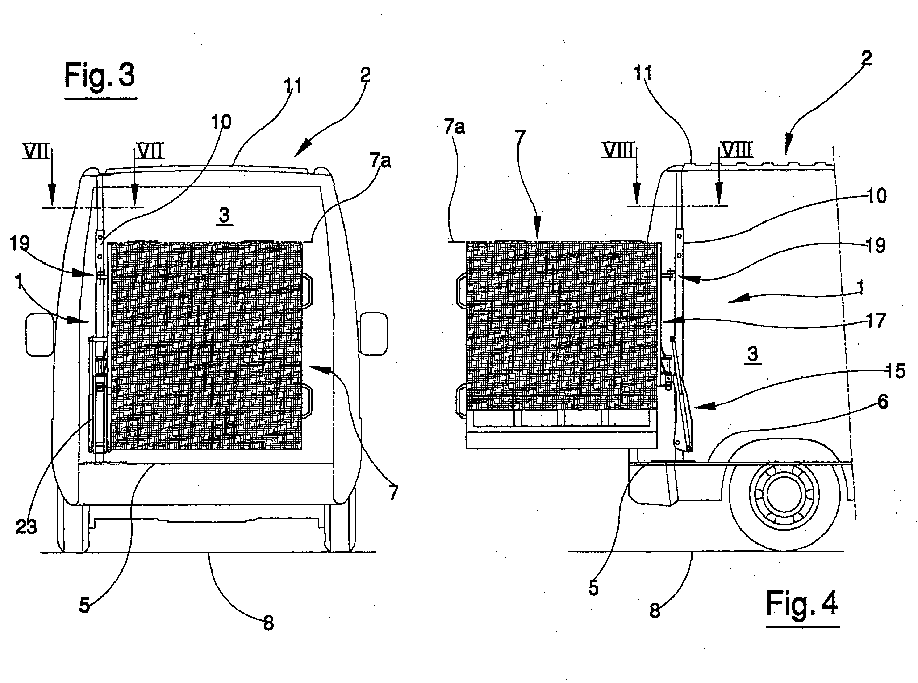

The apparatus 1 comprises a support structure 9 which can be fixed to the van 2; the support structure 9 enables the ramp 7 to be displaced in such a way as to be arranged selectively in three different configurations corresponding to the inclined operative position (see figure 2), in a first rest position in which the ramp 7 is perpendicular to the loading plane 6 (see figure 1, 3, 6) and in a second rest position in which the ramp 7 is perpendicular both to the loading plane 6 and to the edge 5 and is located externally of the loadspace 3 (see figure 4).

The support structure 9 comprises a base upright 10 having a telescopic conformation in order to be adaptable to the distance between the loading plane 6 and the roof 11 of the van 2.

The base upright 10 is solidly constrainable to the van 2 on the edge 5 side, by means of a lower attachment plate 12 and an upper attachment plate which can be removably fixed, for example using screws or bolts, respectively to the load plane 6 and the roof 11.

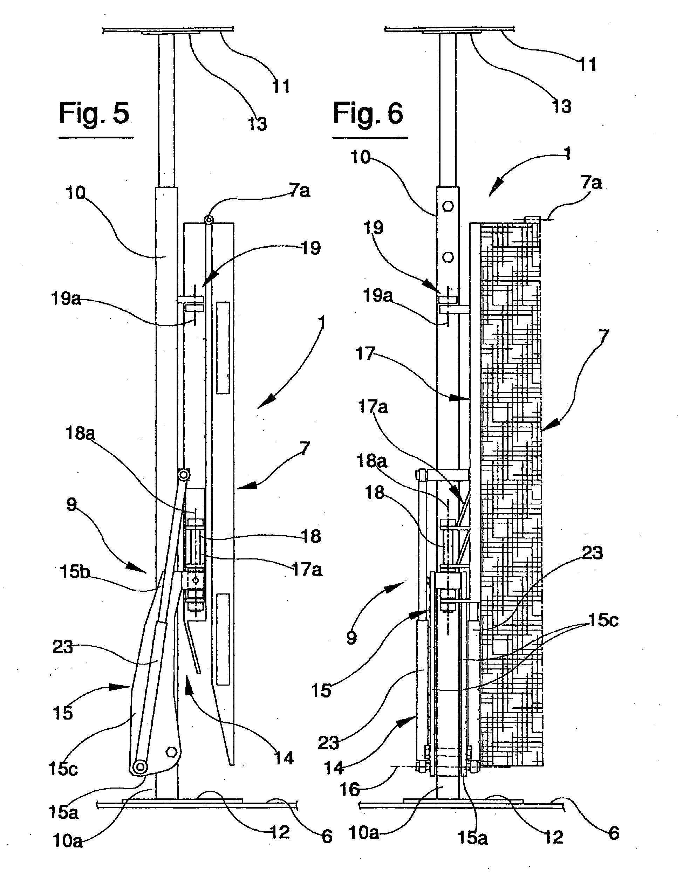

An articulated frame 14 (figures 5 and 6) is rotatably constrained to the base upright 10; the ramp 7 is fixed to the articulated frame 14 and can be selectively displaced in order to reach the above-mentioned three different configurations.

In more detail, the articulated frame 14 comprises an attachment segment 15 exhibiting a first end portion 15a which is rotatably constrained to a lower end 10a of the base upright 10 about a first hinge axis 16 (see figure 6) which is horizontally oriented and parallel to the edge 5 so that the attachment segment 15 is oscillatingly displaceable between a first operative position in which it is aligned to the base upright 10 (see figures 1, 3, 4, 5 and 6) and a second operative position, angled with respect to the base upright 10 and corresponding to the orientation of the ramp 7 in the inclined operative position (see figure 2).

Further, the articulated frame 14 comprises a bearing structure 17 to which the ramp 7 is stably constrained, the bearing structure 17 laterally exhibiting a portion 17a of support which is rotatably constrained to a second end portion 15b of the attachment segment 15 by a pivot 18 which pivot 18 is a second hinge axis 18a which is parallel to the longitudinal development direction of both the ramp 7 and the attachment segment 15.

The bearing structure 17 and the ramp 7 connected to it can rotate in two independent rotary directions, i.e. together with the attachment segment 15, about the first horizontal hinge axis 16 and about the second hinge 18a when vertical.

A hooking device 19 is interpositioned between the bearing structure 17 and the base upright 10 in a distanced position from the lower end 10a of base upright 10, preferably in proximity of the upper attachment plane 13.

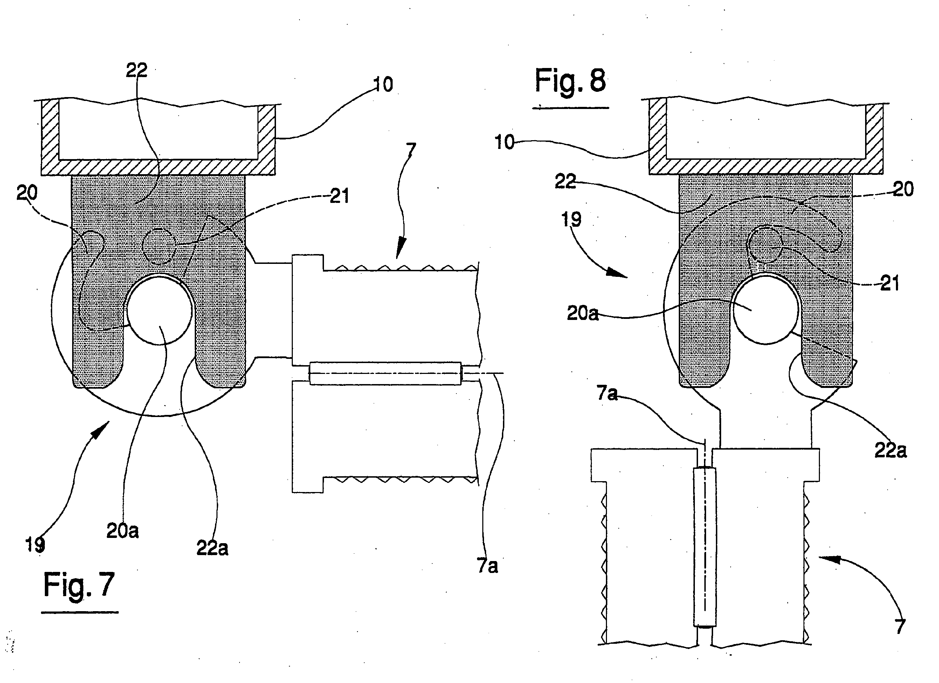

The hooking device 19 comprises (figures 7 and 8) an arched appendix 20 which is solidly constrained to the bearing structure 17 and which projects from the same side of the portion of support 17a and a hinge-shaped engaging element 21 orientated vertically and solidly constrained to a shelf 22 which shelf 22 is solidly constrained to the base upright 10. The shelf 22 exhibits a recess 22a which can be engaged by a pivot 20a solidly constrained to the arched appendix 20.

The arched appendix 20 of the engaging element 21 exhibits a conformation which avoids interference between the arched appendix 20 of the engaging element 21 in the first rest position of the ramp 7, so that the hooking device 19 has a first unengaged configuration which enables rotation of the attachment segment 15, the bearing structure and the ramp 7 about the first horizontal hinge axis 16 (see figure 7).

Further, the conformation of the arched appendix 20 and the engaging element 21 forms a support hinge defining a rotary joint having a vertical rotation axis 19a (figures 5 and 6) which is aligned with the second hinge axis 18a, as soon as the ramp 7 is made to rotate from the first rest position towards the second rest position.

During rotation the hooking device 19 exhibits a second conformation in which the bearing structure 17 is directly constrained to the base upright 10 and blocks the attachment segment 15 in the first operative position, aligned with the base upright 10 (see figure 8).

To facilitate the displacements of the ramp 7 between the inclined operative position and the first rest position two hydraulic cylinders 23 are provided, arranged between the base upright 10 and the attachment segment 15.

The hydraulic cylinders 23 develop thrust in the longitudinal axis direction thereof, which produces a movement with respect to the first horizontal rotation axis 16 which partially supports the weight of the ramp 7 when the ramp 7 is displaced from the vertical position.

Advantageously the attachment segment 15 is formed by two elongate elements 15c which are flat, parallel and distanced one from another in order to be arranged laterally on an opposite side with respect to the base upright 10 in the position in which the attachment segment 15 is aligned with the base upright 10.

This conformation of the attachment segment 15 enables the whole apparatus to be made as small as possible in the first rest position.

Preferably the ramp 7 is articulated at least at one point, having a hinge axis 71 which is parallel to the edge 5 of the loading plane 6.

Thus the ramp 7 can have, when in an operative position, a considerable length which reduces the inclination thereof with respect to the ground, facilitating loading and unloading operations.

The ramp 7 is further provided with at least one adjustable intermediate support element 24 (figure 2) in order to cater for any unevenness in the ground surface.

Finally, on the opposite side to the side on which the portion of support 17a of the bearing structure 17 is situated, the ramp 7 is equipped with a connection element, of known type and not illustrated, for engaging with the lateral wall of the goods loadspace 3 to lock the ramp 7 in the first rest position when the van is in motion, or in any case where no access to the loadspace is required. The functioning of the apparatus for loading and unloading a van as structurally related above is now described.

When the vehicle is in motion, or when there is no need to access the loadspace, the ramp 7 is kept in the first rest position illustrated in figures 1,3, 5 and 6. When access to the loadspace is required but the ramp 7 is not needed, the ramp 7, after the connection element 25 has been disengaged, is rotated about the second hinge axis 18 which is in a vertical position so as to be displaced, with a movement similar to the movement of the rear door of the van, into the second rest position, in which the ramp 7 is located externally of the load plane (see figure 4).

During the rotation about the hinge axis 18, the hooking device 19 ensures the ramp 7 is kept in the vertical position.

When the use of the ramp 7 is required it is possible to move directly from the first rest position into the inclined operative position by rotating, together with the bearing structure 17, the attachment segment 15 and the ramp 7 itself about the first horizontal hinge axis 16 (see figure 2). The hydraulic cylinders 23 facilitate this manoeuvre.

The invention offers important advantages.

The apparatus of the invention is easily and rapidly installable on any type of van, as only one base upright has to be fixed, the base upright being of adjustable length; all that is required is to fix the attachment plates to the load plane and the roof of the van.

Once the base upright has been fixed, the ramp is immediately ready to be moved into the inclined operative position or into the rest position external of the load plane.

Of note and particular advantage is the fact that the ramp 7 can be displaced in two ways, as the mode of access to the load plane can be judged according to the needs of a single loading or unloading operation: either the ramp 7 can be lowered to form the transitable inclined plane, or it can be excluded completely from the operation should it be necessary to near another loading means to the rear loading plane.

Finally, the apparatus of the invention, when in the rest position inside the loadspace of the van, occupies a very limited space, and indeed a space which in any case is normally unused; therefore there is no need to displace goods in order to arrange the ramp 7 in the operative inclined position, or to be moved into the position which is external of the load plane.

## Claims

1. An apparatus for loading and unloading operations for vans and like vehicles, comprising at least one ramp (7) which can be arranged in an operative inclined position in order to form a transitable plane developing between ground level and an edge (5) of a loading plane (6) of the van; a support structure (9) of the ramp (7) which support structure (9) is fixable to the van and enables displacements of the ramp (7) so that the ramp (7) can be selectively arranged in three different configurations, namely the inclined operative position, a first rest position in which the support structure (9) is perpendicular to the load plane (6) and is positioned parallel to the edge (5), and a second rest position in which the ramp (7) is perpendicular both to the load plane (6) and to the edge (5) and is located externally of the load plane (6);
***said*** support structure (9) compris***ing***: a base upright (10) which is solidly constrainable to the van, above the load plane (6) and laterally with respect to the edge (5); and an articulated frame (14), to which the ramp (7) is fixed, which articulated frame (14) is rotatably constrained to the base upright (10) and enables the ramp (7) to be displaced to achieve the three different configurations, ***said articulated frame (14) comprising: an attachment segment (15) exhibiting a first end portion (15a) rotatably constrained to a lower end (10a) of the base upright (10) at a first horizontal hinge axis (16) which is parallel to the edge (5) so that the attachment segment (15) is displaceable between a first operative position aligned with the base upright (10) and a second operative position which is angled with respect to the base upright (10) and corresponds with the orientation of the ramp (7) in the inclined operative position; and further comprises a bearing structure (17) to which the ramp (7) is fixed, which bearing structure (17) laterally exhibits a support portion (17a) engaged rotatably to a second end portion (15b) of the attachment segment (15) by a second hinge axis (18) arranged parallel to the longitudinal development direction both of the ramp (7) and of the attachment segment (15);***
**characterised in that**: at least one hydraulic cylinder (23) is interpositioned between the attachment segment (15) and the base upright (10), which at least one hydraulic cylinder (23) facilitates displacements of the ramp (7) between the inclined operative position and the first rest position.; **a hooking device (19) being positioned between the bearing structure (17) and the base upright (10), and being positioned at a distance from the lower end (10a) of the base upright (10) and exhibiting a disengaged first configuration corresponding with the first rest position of the ramp (7) in order to enable rotation of the attachment segment (15) about the first hinge axis (16) and a connected second configuration in which the bearing structure (17) is constrained to the base upright (10) in order to block the attachment segment (15) in the first operative position, aligned with the base upright (10) in at least the second rest position of the ramp (7); the hooking device (19) comprising an arched appendix (20) which is solidly constrained to the bearing structure (17) and projects from a same side as the portion of support (17a) and an engaging element (21) which is hinge-shaped and solidly constrained to the base upright (10), the arched appendix (20) and the engaging element (21) exhibiting a conformation which involves no reciprocal interference in the first rest position of the ramp (7) and which forms at least in the second rest position of the ramp (7) a support hinge with a rotary joint having a rotation axis (17a) which is aligned with the second hinge axis (18).**

2. The apparatus of claim ***1* characterised in that** the base upright (10) is adjustable in length and comprises at an end thereof a lower attachment plate (12) and an upper attachment plate (13) which can be removably fixed to the load plane (6) and to the roof (11) of the van.

3. The apparatus of claim ***1*, characterised in that** the attachment segment (15) comprises two elongate elements (15c) which are parallel and distanced so as to be able to be laterally arranged on opposite sides with respect to the base upright (10) in the first operative position and be aligned with the base upright (10).

4. The apparatus of claim 1, **characterised in that** the ramp (7) can be articulated at one point thereof at least, as it exhibits a hinge which is parallel to the edge (5) of the load plane (6).

5. The apparatus of claim **4, characterised in that** the ramp (7) is provided with at least one length-adjustable intermediate element (24) for resting on the ground.

## Patentansprüche

1. Vorrichtung zum Be- und Entladen von Kleintransportern und ähnlichen Fahrzeugen, enthaltend wenigstens eine Rampe (7), welche in einer geneigten Betriebsposition angeordnet werden kann, um eine begehbare Ebene zu bilden, die sich zwischen dem Boden und einer Kante (5) der Ladefläche (6) des Transporters erstreckt; eine Trägerstruktur (9) für die Rampe (7), welche Trägerstruktur (9) an dem Transporter befestigt werden kann und Verstellungen der Rampe (7) erlaubt, so dass die Rampe (7) wahlweise in drei verschiedenen Konfigurationen angeordnet werden kann, nämlich eine geneigte Betriebsposition, eine erste Ruheposition, in welcher die Trägerstruktur (9) lotrecht zu der Ladefläche (6) verläuft und parallel zu der Kante (5) positioniert ist, und eine zweite Ruheposition, in welcher die Rampe (7) lotrecht zu der Ladefläche (6) und zu der Kante (5) verläuft und ausserhalb der Ladefläche (6) angeordnet ist; wobei die genannte Trägerstruktur (9) wie folgt enthält: einen Basisständer (10), welcher fest an dem Transporter anbringbar ist, und zwar oberhalb der Ladefläche (6) und seitlich im Verhältnis zu der Kante (5); und einen Gelenkrahmen (14), an welchem die Rampe (7) befestigt ist, welcher Gelenkrahmen (14) drehbar an dem Basisständer (10) gehalten ist und es der Rampe (7) erlaubt, verstellt zu werden, um drei verschiedene Konfigurationen zu erreichen, wobei der genannte Gelenkrahmen (14) wie folgt enthält: ein Anschlusselement (15), das einen ersten Endabschnitt (15a) aufweist, drehbar gehalten an einem unteren Ende (10a) des Basisständers (10) an einer ersten horizontalen Gelenkachse (16), welche parallel zu der Kante (5) verläuft, so dass das Anschlusselement (15) verstellbar ist zwischen einer ersten Betriebsposition, ausgerichtet zu dem Basisständer (10), und einer zweiten Betriebsposition; welche im Verhältnis zu dem Basisständer (10) angewinkelt ist und der Ausrichtung der Rampe (7) in der geneigten Betriebsposition entspricht; und wobei er ausserdem eine Trägerstruktur (17) enthält, an welcher die Rampe (7) befestigt ist, welche Trägerstruktur (17) seitlich einen Trägerabschnitt (17a) aufweist, drehbar befestigt an einem zweiten Endabschnitt (15b) des Anschlusselementes (15) durch eine zweite Gelenkachse (18), angeordnet parallel zu der Richtung der Längenausdehnung sei es der Rampe (7) wie auch des Befestigungselementes (15); **dadurch gekennzeichnet, dass** wenigstens ein Hydraulikzylinder (23) zwischen dem Anschlusselement (15) und dem Basisständer (10) eingesetzt ist, welcher wenigstens eine Hydraulikzylinder (23) das Verstellen der Rampe (7) zwischen der geneigten Betriebsposition und der ersten Ruheposition erleichtert; wobei eine Einhakvorrichtung (19) zwischen der Trägerstruktur (17) und dem Basisständer (10) positioniert ist, und zwar mit einem Abstand von dem unteren Ende (10a) des Basisständers (10), und die eine freigegebene erste Konfiguration aufweist, welche der ersten Ruheposition der Rampe (7) entspricht, um die Umdrehung des Anschlusselementes (15) um die erste Gelenkachse (16) zu erlauben, und eine angeschlossene zweite Konfiguration, in welcher die Trägerstruktur (17) an dem Basisständer (10) gehalten ist, um das Anschlusselement (15) in der ersten Betriebsposition zu blockieren, ausgerichtet zu dem Basisständer (10) in wenigstens der zweiten Ruheposition der Rampe (7); wobei die Einhakvorrichtung (19) einen gebogenen Ansatz (20) enthält, welcher fest an der Trägerstruktur (17) gehalten ist und von derselben Seite wie der Trägerabschnitt (17a) hervorsteht, sowie ein Eingriffselement (21), welches scharnierartig geformt und fest an dem Basisständer (10) angebracht ist, wobei der gebogene Ansatz (20) und das Eingriffselement (21) eine Ausbildung aufweisen, die dazu dient, in der ersten Ruheposition der Rampe (7) nicht gegenseitig einzuwirken, und welche wenigstens in der zweiten Ruheposition der Rampe (7) ein Trägerscharnier mit einer Drehverbindung bilden, die eine Drehachse (17a) hat, welche zu der zweiten Gelenkachse (18) ausgerichtet ist.

2. Vorrichtung nach Patentanspruch 1, **dadurch gekennzeichnet, dass** der Basisständer (10) in der Höhe regulierbar ist und an seinen Enden eine untere Anschlussplatte (12) und eine obere Anschlussplatte (13) enthält, welche lösbar an der Ladefläche (6) und an dem Dach (11) des Transporters befestigt werden können.

3. Vorrichtung nach Patentanspruch 1, **dadurch gekennzeichnet, dass** das Anschlusselement (15) zwei Verlängerungselemente (15c) aufweist, parallel und voneinander abstehend, so dass sie in der Lage sind, in der ersten Betriebsposition seitlich an entgegengesetzten Seiten im Verhältnis zu dem Basisständer (10) angeordnet und zu dem Basisständer (10) ausgerichtet zu werden.

4. Vorrichtung nach Patentanspruch 1, **dadurch gekennzeichnet, dass** die Rampe (7) wenigstens an einem ihrem Punkt geschwenkt werden kann, an dem sie ein Gelenk aufweist, welches parallel zu der Kante (5) der Ladefläche (6) verläuft.

5. Vorrichtung nach Patentanspruch 4, **dadurch gekennzeichnet, dass** die Rampe (7) mit wenigstens einem längenverstellbaren Zwischenelement (24) zum Aufsetzen auf den Boden versehen ist.

## Revendications

1. Dispositif pour les opérations de chargement et de déchargement d'une fourgonnette ou véhicules similaires, comprenant au moins une rampe (7) pouvant être disposée dans une position inclinée opérationnelle de manière à former un plan de transit se développant entre le niveau du sol et un bord (5) d'un plan de chargement (6) de la fourgonnette; une structure de support (9) de la rampe (7), laquelle peut être fixée à la fourgonnette et permet des mouvements de la rampe (7) de manière à ce que cette dernière puisse être sélectivement disposée dans trois configurations différentes, c'est-à-dire la position inclinée opérationnelle, une première position de repos dans laquelle la structure de support (9) est perpendiculaire au plan de chargement (6) et est positionnée parallèlement au bord (5), et une seconde position de repos dans laquelle la rampe (7) est perpendiculaire aussi bien au plan de chargement (6) qu'au bord (5) et est située extérieurement au plan de chargement (6); ladite structure de support (9) comprenant: un montant de base (10) fixé de manière solidaire à la fourgonnette, au-dessus du plan de chargement (6) et latéralement par rapport au bord (5); et un châssis articulé (14), sur lequel la rampe (7) est fixée, lequel châssis articulé (14) étant fixé de manière rotative au montant de base (10) et permettant à la rampe (7) d'être mise en mouvement pour obtenir les trois différentes configurations, ledit châssis articulé (14) comprenant: un segment de fixation (15) présentant une première partie d'extrémité (15a) fixée de manière rotative à une extrémité inférieure (10a) du montant de base (10) en correspondance d'un premier axe horizontal d'articulation (16) parallèle au bord (5) de manière à ce que le segment de fixation (15) soit déplaçable entre une première position opérationnelle alignée avec le montant de base (10) et une seconde position opérationnelle angulée par rapport au montant de base (10) et correspondant à l'orientation de la rampe (7) dans la position opérationnelle inclinée; et comprend de plus une structure de support (17) sur laquelle la rampe (7) est fixée, laquelle structure de support (17) présentant latéralement une portion de support (17a) engagée de manière rotative sur une seconde partie d'extrémité (15b) du segment de fixation (15) par un second axe d'articulation (18) disposé parallèlement à la direction de développement longitudinale aussi bien de la rampe (7) que du segment de fixation (15);
**caractérisé en ce que**: au moins un vérin hydraulique (23) est interposé entre le segment de fixation (15) et le montant de base (10), lequel au moins un vérin hydraulique (23) facilite les mouvements de la rampe (7) entre la position opérationnelle inclinée et la première position de repos; un dispositif d'accrochage (19) étant positionné entre la structure de support (17) et le montant de base (10), et étant positionné à une distance par rapport à l'extrémité inférieure (10a) du montant de base (10) et présentant une première configuration désengagée correspondant à la première position de repos de la rampe (7) de manière à permettre une rotation du segment de fixation (15) autour du premier axe d'articulation (16), et une seconde configuration connectée dans laquelle la structure de support (17) est engagée sur le montant de base (10) de manière à bloquer le segment de fixation (15) dans la première position opérationnelle, aligné avec le montant de base (10) dans au moins la seconde position de repos de la rampe (7); le dispositif d'accrochage (19) comprenant un appendice arqué (20) solidaire de la structure de support (17) et saillant du même côté que la portion de support (17a), et un élément d'engagement (21) ayant une forme d'articulation et étant solidaire au montant de base (10), l'appendice arquée (20) et l'élément d'engagement (21) présentant une conformation n'impliquant pas d'interférence réciproque dans la première position de repos de la rampe (7) et formant au moins dans la seconde position de repos de la rampe (7) une articulation de support avec un joint rotatif ayant un axe de rotation (17a) aligné au second axe d'articulation (18).

2. Dispositif selon la revendication 1, **caractérisé en ce que** le montant de base (10) est ajustable en longueur et comprend en correspondance d'une de ses extrémités une plaque de fixation inférieure (12) et une plaque de fixation supérieure (13) pouvant être fixées de manière amovible au plan de chargement (6) et au toit (11) de la fourgonnette.

3. Dispositif selon la revendication 1, **caractérisé en ce que** le segment de fixation (15) comprend deux éléments allongés (15c) parallèles et espacés de manière à pouvoir être latéralement disposés sur des côtés opposés par rapport au montant de base (10) dans la première position opérationnelle et alignés au montant de base (10).

4. Dispositif selon la revendication 1, **caractérisé en ce que** la rampe (7) peut être articulée au moins en un de ses points, puisqu'elle présente une articulation parallèle au bord (5) du plan de chargement (6).

5. Dispositif selon la revendication 4, **caractérisé en ce que** la rampe (7) est pourvue d'au moins un élément intermédiaire (24) ajustable en longueur pour reposer sur le sol.
